# EUROPÄISCHE PATENTSCHRIFT

(11) **EP 3 545 904 B1**
(45) Veröffentlichungstag und Bekanntmachung des Hinweises auf die Patenterteilung: **06.10.2021**
(21) Anmeldenummer: 19165179.3
(22) Anmeldetag: 26.03.2019
(51) Int. Cl.: A61C 13/00, A61C 13/34, A61C 13/08, A61C 9/00

(54) **VERFAHREN ZUR HERSTELLUNG EINES ARBEITSMODELLS FUER DENTALMEDIZINISCHE ZWECKE AUS EINER DIGITALISIERTEN ABFORMUNG**
METHOD FOR PRODUCING A WORKING MODEL FOR DENTAL USE FROM A DIGITISED REPLICATION
PROCÉDÉ DE FABRICATION D'UN MODÈLE DE TRAVAIL À USAGE MÉDICO-DENTAIRE À PARTIR D'UN MOULAGE NUMÉRISÉ

(30) Priorität: 29.03.2018 DE 102018107658
(43) Veröffentlichungstag der Anmeldung: 02.10.2019
(73) Patentinhaber: Shera Werkstoff-Technologie GmbH & Co KG, 49448 Lemförde (DE)
(72) Erfinder: SIEKER, Guido, 32312 Lübbecke (DE)
(74) Vertreter: Fritz, Edmund Lothar

(56) Entgegenhaltungen:
- WO-A1-2011/103879
- WO-A2-2014/018829
- DE-A1- 3 824 786
- US-A1- 2013 216 980

## Beschreibung

Die vorliegende Erfindung betrifft ein Verfahren zur Herstellung eines Arbeitsmodells für dentalmedizinische Zwecke aus einer digitalisierten Abformung.

Nach dem Stand der Technik wird bei der Herstellung von Einzelkronen als Zahnersatz in der Regel wie folgt vorgegangen. Ein Zahnarzt nimmt einen tatsächlichen Abdruck eines zu reparierenden Zahnstumpfes mit seinen benachbarten intakten Zähnen im Mund eines Patienten ab (Gebissabdruck). Dies geschieht mit Hilfe von Abdruckmitteln, die in den Mund des Patienten eingeführt werden und dort aushärten. Am Zahnabdruck hängen meistens noch Speichelreste oder Blutreste. Der Zahnabdruck wird deshalb desinfiziert.

Der Zahnabdruck wird per Post oder Kurierdienst an ein Dentallabor übersandt. Der Zahnabdruck wird gereinigt. Vom Zahnabdruck wird ein Modell aus Gips oder einem anderen Material wie einem aushärtbaren Polymeren (z.B. aus einem Polyurethan, Polyepoxid oder dergleichen) hergestellt (Modell 1). Bevorzugt verwendet man hierfür Gips.

Der zu restaurierende Zahnstumpf wird aus dem Modell herauspräpariert (zum Beispiel herausgesägt und/oder herausgefräst). Es entsteht ein herausnehmbarer Zahnstumpf aus Gips, dessen Form unterhalb der Präparationsgrenze konisch verläuft. Dabei muss die Präparationsgrenze des Stumpfes genauestens herausgearbeitet werden, da diese Linie später (wenn der Zahnersatz darauf modelliert wird) den Abschluss zwischen Zahnersatz und präpariertem Zahn bildet. Spaltbildungen fördern bakterielle Infektionen.

Der so gewonnene Zahnstumpf wird mit einem Konus (auch zum Beispiel aus Gips) versehen. Die präparierte Zahnfläche wird mit der größeren Basisfläche des Konus verbunden, sie sitzt dann oben auf dem Konus.

Danach wird die Oberfläche des Konus mit dem darauf präparierten Zahnstumpf mit einem Isolierungsmittel behandelt. Der Zahnstumpf mit Konus wird wieder in den Abdruck (Zahnarzt/vom Patienten) positioniert. Die Positionierung erfolgt so, dass die Zahnreihe mit dem Stumpf "isotaktisch" liegt. Dies ist eine besondere handwerkliche Leistung.

Der ganze Abdruck (Zahnarzt/vom Patienten) mit dem in ihm positionierten Zahnstumpf (mit Konus) wird wieder mit Gips aufgefüllt (Modell 2). Der Gips härtet aus und wenn man Erfolg hat, kann man den Konus mit dem Stumpf aus dem neu ausgegossenen Abdruck herausziehen. Manchmal bilden sich jedoch kleine Vorsprünge oder Verkantungen aus, so dass man den Konus (mit Stumpf) nicht aus dem Modell herausziehen oder drücken kann. Dann muss die gesamte Arbeit wiederholt werden.

Auf den Zahnstumpf (mit dem Konus) modelliert der Dentaltechniker den vollständigen Zahn aus Wachs oder dergleichen und überprüft seinen Modellierungserfolg, das heißt die geometrische Kompatibilität mit der benachbarten intakten Zahnreihe im Hinblick auf die Höhe, die axiale Richtung, den Platzbedarf und den Abschluss zum Zahnfleisch, wobei er dazu den modellierten Zahn gegebenenfalls mehrfach jeweils in das Modell 2 einführt. Beispielsweise in einem Gießverfahren (z.B. CoCrMo-Legierungsguss) wird hieraus die Zahnkrone als Zahnersatz hergestellt.

Die obigen Ausführungen zeigen deutlich die zahlreichen Arbeitsgänge, den damit verbundenen Zeitaufwand und den hohen Materialaufwand bei Anwendung der nach dem derzeitigen Stand der Technik notwendigen konventionellen Arbeitsgänge zur Herstellung einer Einzelkrone.

Die US 2017/0049542 A1 beschreibt ein Verfahren, bei dem ein virtuelles Modell einer Zahnreihe erstellt wird, wobei die Zähne als herausnehmbare Komponenten ausgebildet sind, die in entsprechende Vertiefungen im Zahnfleischbereich des virtuellen Modells hineinpassen, wobei Mittel für das Halten und Positionieren jeder herausnehmbaren Komponenten in der jeweiligen Vertiefung in dem virtuellen Modell vorgesehen sind und diese Mittel zum Halten und Positionieren so ausgebildet sind, dass die Kontaktfläche im Verbindungsbereich zwischen der herausnehmbaren Komponente und der Wand der Vertiefung durch die Form der aneinandergrenzenden Flächen gesteuert wird. In diesem Dokument wird jedoch nicht das reale Modell eines Zahnstumpfs mittels eines Konus in das reale Modell der Zahnreihe mit den übrigen Zähnen eingepasst.

In der US 2009/0220916 A1 wird ein Verfahren zur Erstellung eines dreidimensionalen Modells eines Dentalabdrucks beschrieben, bei dem zunächst wenigstens ein Teil eines oberen Kieferabdrucks oder unteren Kieferabdrucks gescannt wird, die Qualität des Abdruckscans bewertet und der Abdruckscan verwendet wird, um ein dreidimensionales Modell für den Dentalabdruck zu erstellen. Das Dentalmodell kann hier durch 3D-Druck hergestellt werden. Die Orientierung und Lokalisierung eines dentalen Implantats wird hier aufgrund von zuvor gescannten Daten bestimmt.

Aus der WO 2011/103879 A1 ist ein Verfahren zur Herstellung eines Arbeitsmodells für dentalmedizinische Zwecke aus einer digitalisierten Abformung bekannt, bei dem der Zahnstumpf auf einen Zylinder aufgesetzt ist. Bei einem Zylinder mit einer säulenartigen Geometrie besteht die Gefahr des Verkantens beim Einsetzen des Zahnstumpfs in eine Ausnehmung im Modell der Zahnreihe. Ein Verdrehschutz, der eine Rotation des Zahnstumpfs um seine Längsachse verhindert, ist bei dieser bekannten Lösung ebenfalls nicht vorgesehen.

Die US 2013/216980 A1 beschreibt ein dentales Modell, bei dem der die Zahnreihe betreffende Teil eine Aufnahme hat für einen Schaftbereich, auf dem sich der Zahnstumpf befindet, wobei der Schaftbereich in die Aufnahme eingesetzt werden kann. Bei einer in den Beispielen beschriebenen Variante befindet sich unter dem Zahnstumpf ein konischer Übergangsabschnitt, wobei der eigentliche Schaftbereich jedoch unterhalb dieses Übergangsabschnitts liegt. Dieser Schaftbereich hat eine im Querschnitt polygonale Form mit eckigen Rippen und mehreren angeformten Kugeln, die nach außen hin vorstehen und in entsprechende kugelförmige Vertiefungen der Aufnahme eingreifen. Der Schaftbereich wird hier jedoch nicht passend (formschlüssig) von der Aufnahme aufgenommen, sondern es werden gefaltete Federn verwendet, so dass der Schaft durch die Federkraft der komprimierten Feder in der Aufnahme gehalten wird.

Die DE 38 24 786 A1 beschreibt ein Meistermodell für die Herstellung von Zahnprothesen, bei dem der Zahn auf einem konisch geformten Zahnstumpf ruht, welcher in einer entsprechend geformten Aufnahme eines Einsatzes sitzt, wobei die Aufnahme in einer Aufnahmeöffnung eines Sockels fluchtet. Der Sockel ist wiederum in einen Frässockel eingesetzt. Ein Verdrehschutz für den Konus in der Aufnahme ist hier nicht vorgesehen.

Aufgabe der vorliegenden Erfindung ist es, ein einfaches und gleichzeitig zuverlässiges Verfahren zur Herstellung eines Arbeitsmodells für dentalmedizinische Zwecke zur Verfügung zu stellen, welches über eine genaue und zielgerichtete Positionierung des Zahnstumpfes die gewünschte Ausrichtung der herzustellenden Zahnkrone im Zahnkranz der zur Zahnkrone benachbarten Zähne des Patienten ermöglicht.

Die Lösung dieser Aufgabe liefert ein Verfahren zur Herstellung eines Arbeitsmodells für dentalmedizinische Zwecke aus einer digitalisierten Abformung mit den Merkmalen des Anspruchs 1.

Bei dem erfindungsgemäßen Verfahren bringt man zum Verhindern einer Rotation des Konus, auf dem sich das Modell des Zahnstumpfes befindet, in einer entsprechenden Ausnehmung im Modell der Zahnreihe an dem Konus eine seitliche Vertiefung als Verdrehschutz ein, der ein entsprechender erhabener Bereich in der konischen Ausnehmung des Modells der Zahnreihe entspricht, welcher passend in die Vertiefung eingreift.

Bei dem erfindungsgemäßen Verfahren geht man so vor, dass
--man mittels eines Intraoralscanners einen digitalen Datensatz zur Darstellung eines Modells einer bestehenden Zahnreihe umfassend einen mit einer Zahnkrone zu versehenden Zahnstumpf erstellt,
--man die digitalen Daten betreffend den Zahnstumpf von den Daten betreffend die Zahnreihe mit den übrigen Zähnen trennt,
--man von der Zahnreihe mit den übrigen Zähnen ohne den Zahnstumpf anhand der digitalen Daten im 3D-Druck ein reales Modell erstellt,
--man anhand der digitalen Daten betreffend den Zahnstumpf diesen zunächst virtuell auf einen Konus aufsetzt,
--man von dem auf den Konus aufgesetzten Zahnstumpf anhand der digitalen Daten im 3D-Druck ein reales Modell erstellt, welches im Bereich des extrahierten Zahnstumpfs zu dem realen Modell der Zahnreihe mit den übrigen Zähnen komplementär ist,
--man das reale Modell des Zahnstumpfs mittels des Konus in das reale Modell des Zahnreihe mit den übrigen Zähnen einpasst.

Anschließend kann man in an sich bekannter Weise auf dem Zahnstumpf ein Modell der zu erstellenden Zahnkrone modellieren, aus dem anschließend die Zahnkrone hergestellt wird, wobei man das Modell der Zahnkrone anhand der komplementären Modelle der Zahnreihe und des Zahnstumpfes so modelliert, dass sich das Modell der Zahnkrone in einer exakt definierten Position in das Modell der Zahnreihe einfügt.

Anders als im Stand der Technik wird somit gemäß der Erfindung zunächst mittels eines Intraoralscanners ein digitales Bild der Zahnsituation im Mund des Patienten erstellt, mittels dessen man den Zahnstumpf erfasst, welcher zu überkronen ist sowie die diesem benachbarten Zähne der Zahnsituation. Danach erstellt man ein reales Modell der Zahnreihe, wobei man jedoch den Zahnstumpf digital quasi aus dem Modell heraustrennt, so dass man einerseits Daten bezüglich der übrigen Zähne der Zahnsituation erhält, mit einem konischen Loch, dort wo sich der Zahnstumpf befand und andererseits Daten des digital herausgetrennten Zahnstumpfs auf einem Konus. Mit diesen Daten kann man nun jeweils reale Modelle der Zahnsituation mit den übrigen Zähnen einerseits und des Zahnstumpfs auf dem Konus andererseits erstellen, wobei man diese realen Modelle gemäß der Erfindung im 3D-Druck mit Hilfe der zuvor gewonnenen Daten erstellt.

Damit hat man zwei zueinander komplementäre Modelle mit genauer gegenseitiger Passung, die der Zahntechniker bei der anschließenden Anfertigung der Zahnkrone auf dem Zahnstumpf des Modells beliebig oft zusammenfügen und wieder trennen kann, um die Krone auf dem Zahnstumpf bzw. zunächst ein Modell dieser Krone so anzufertigen, dass sie sich hinsichtlich der axialen Lage und der Ausrichtung genau in die Situation der angrenzenden Zähne der Zahnsituation einfügt.

Da man beim Abscannen der Zahnsituation des Patienten in der Regel nur Daten der abgescannten Oberfläche gewinnt, ist es bevorzugt so, dass man die mittels des Intraoralscanners gewonnenen Daten zunächst mittels einer geeigneten Software, beispielsweise einer CAD-Software in für einen 3D-Druck geeignete Daten umwandelt.

Eine bevorzugte Weiterbildung der erfindungsgemäßen Aufgabenlösung sieht vor, dass man die exakte axiale Position des Modells des Zahnstumpfes in dem Modell der Zahnreihe über die Länge des Konus und/oder den Konuswinkel des Konus vorgibt. Man positioniert gemäß dieser bevorzugten Variante der Erfindung den Zahnstumpf in dem digitalen Modell (also virtuell) auf einem Konus, den man aus dem digitalen Modell der Zahnsituation mit den übrigen Zähnen heraustrennt, so dass dort eine konische Vertiefung verbleibt. Wenn man dann aus diesen digitalen Modellen von Zahnsituation einerseits und Konus mit Zahnstumpf andererseits reale Modelle im 3D-Druck erstellt, passt der Konus genau in die konische Vertiefung. Beim späteren Einfügen des Konus in die konische Vertiefung von Hand durch den Zahntechniker werden die Koordinaten der exakten Position des Konus quasi über Zylinderkoordinaten definiert, das heißt zum einen wird über die Länge des Konus und über den Konuswinkel die axiale Position des Zahnstumpfs festgelegt. Über die Rotationsstellung des Konus in der konischen Vertiefung wird die Drehstellung des Zahnstumpfes festgelegt.

Das erfindungsgemäße Verfahren gewährleistet ein hohes Maß an Präzision, da im 3D-Druck ein Konus mit bestimmten Eigenschaften erstellt wird, der den Dentaltechniker in die Lage versetzt, damit ein Präzisionsimplantat herzustellen. Dazu wird ein entsprechend geformter Hohlraum (eine Ausnehmung) im Modell der Zahnreihe konstruiert, in den sich der Konus einsetzen lässt. Für den Konus werden definierte Konstruktionsmerkmale festgelegt, nämlich Konuswinkel und Konuslänge, über die die exakte axiale Position eingestellt werden kann.

Gemäß einer bevorzugten Weiterbildung der Erfindung wird vorgeschlagen, dass die Konuslänge im Bereich von etwa 10 mm bis etwa 30 mm liegt. Eine Konuslänge in dieser Größenordnung reicht erfahrungsgemäß aus, um einen Formschluss mit dem Modell der Zahnsituation mit den übrigen Zähnen zu schaffen, wenn der Konus, auf dem sich der Zahnstumpf befindet, in die Vertiefung in der Zahnsituation eingesetzt wird.

Besonders bevorzugt liegt der Konuswinkel (λ) zwischen etwa 2° und etwa 20°, wobei der Zahnstumpf auf das breitere Ende des Konus aufgesetzt wird. Der Konuswinkel ist somit vorzugsweise verhältnismäßig klein. Da der angegebenen Konuswinkel denjenigen Winkel angibt, den die Mantelfläche des Konus mit der Vertikalen einschließt, ergibt sich aus einem kleinen Konuswinkel ein vergleichsweise steiler Konus. Da der Konus zuvor "digital" aus dem Modell der Zahnreihe herausgetrennt wurde, ist die Mantelfläche genau passend zur Fläche der den Konus aufnehmenden Vertiefung in dem Modell der Zahnreihe. Der wesentliche Vorteil liegt in dieser absolut genauen Passung, aufgrund derer der Konus genau in das Modell der Zahnreihe passt und jederzeit wieder aus der konischen Vertiefung nach oben hin herausgenommen werden kann. Bei einem von Hand gefertigten Modell (nach dem Stand der Technik) kann man hingegen eine solche Genauigkeit nicht erreichen.

Eine bevorzugte Weiterbildung der erfindungsgemäßen Lösung schlägt vor, dass man die exakte axiale Endposition des Modells des Zahnstumpfes über wenigstens eine Markierung am Konus festlegt, welcher ein Kontrollfenster im Modell der Zahnreihe zugeordnet ist. Diese Lösung erleichtert dem Zahntechniker das Erkennen, ob der Konus, auf dem sich der Zahnstumpf befindet, in seine vorgesehene Endposition in der konischen Vertiefung des Modells der Zahnreihe eingeschoben ist.

Dabei kann als Markierung beispielsweise eine Vertiefung vorgesehen sein, vorzugsweise eine im Umriss etwa kreisrunde Vertiefung im Umfangsbereich des Konus. Durch das Kontrollfenster erkennt man dann die richtige Position der Vertiefung und somit des Konus, wobei das Kontrollfenster gleich groß dimensioniert sein sollte wie die Vertiefung, die sich vorzugsweise im unteren Bereich an dem Konus, d.h. an seinem schmaleren Ende befindet, so dass man beim Einschieben des Konus in die konische Vertiefung des Modells die genaue Position daran erkennen kann, dass die Vertiefung mit dem Kontrollfenster zur Deckung kommt. Der Zahntechniker kann daher beim Einpassen des Konus in die konische Vertiefung in dem Modell der Zahnsituation durch das Kontrollfenster in dem letztgenannten Modell hindurchsehen und erkennt, wenn die Vertiefung in dem Konus sich mit dem Kontrollfenster deckt, dass der Konus exakt seine eingeschobene Endposition erreicht hat.

Problematisch ist für den Zahntechniker, dass sich der Konus beim Einsetzen in die konische Vertiefung um seine Achse verdrehen könnte, wodurch sich Abweichungen in der exakten Positionierung des Zahnstumpfes, auf den die Krone aufgesetzt wird, ergeben können. Um dies zu verhindern, ist gemäß der Erfindung vorgesehen, dass man zum Verhindern einer Rotation des Konus, auf dem sich das Modell des Zahnstumpfes befindet, in der entsprechenden Aussparung im Modell der Zahnreihe an dem Konus eine seitliche Vertiefung als Verdrehschutz einbringt, der ein entsprechender erhabener Bereich in der Aussparung des Modells der Zahnreihe entspricht, welcher passend in die Vertiefung eingreift.

Diese Vertiefung erstreckt sich bevorzugt in Längsrichtung des Konus entlang seiner Mantelfläche. Diese Vertiefung kann beispielsweise im Querschnitt etwa teilkreisförmig ausgebildet sein. Dieser Vertiefung ist ein entsprechend geformter Bereich in der konischen Vertiefung des Modells der Zahnreihe zugeordnet, so dass sich beim Einschieben des Konus in die konische Vertiefung eine Art Formschluss nach dem Prinzip von Nut und Feder ergibt. Hierdurch erhält der Konus beim Einschieben in die konische Vertiefung eine exakte axiale Führung und ein Verdrehen des Konus um seine Längsachse wird effektiv verhindert.

Die Vertiefung an dem Konus kann beispielsweise so ausgebildet sein, dass sie sich vom unteren Ende des Konus ausgehend in Einschubrichtung (konisch) verjüngt, so dass das Einschieben des Konus erleichtert wird, aber gleichzeitig beim weiteren Einschieben des Konus die Passung zwischen dem Konus, auf dem der Zahnstumpf sitzt und der Zahnreihe nach und nach zunimmt und die Toleranzen zwischen beiden Bauteilen sich weiter verringern. Auf diese Weise ergibt sich eine sehr genaue gegenseitige Festlegung. Anders als bei von Hand erstellten Modellen, wie diese im Stand der Technik vorgesehen sind, ist es dabei jederzeit problemlos möglich, den Konus wieder aus der Vertiefung im Modell der Zahnreihe herauszuziehen, wenn beispielsweise festgestellt wurde, dass Korrekturen an dem Modell der Zahnkrone vorzunehmen sind. Vorsprünge oder Verkantungen, die ein solches Herausziehen verhindern, treten aufgrund der exakten Fertigung im 3D-Druck nach einem digitalen Modell nicht auf.

Es kann gemäß einer beispielhaften bevorzugten Variante der Erfindung so sein, dass die Vertiefung an dem Konus im Schnitt etwa teilkreisförmig ausgebildet ist und sich entlang der Mantelfläche des Konus erstreckt.

Eine bevorzugte Weiterbildung der Erfindung sieht vor, dass sich in dem Modell der Zahnreihe unterhalb der Aussparung, in die der Konus mit dem Zahnstumpf einsetzbar ist, eine Bohrung in Verlängerung der Längsachse des Konus befindet, so dass man mittels eines in die Bohrung eingeführten Werkzeugs den Konus nach oben hin aus der Aussparung drücken kann. Dies erleichtert das Herausnehmen des Konus aus der Vertiefung, der in dieser ja eine sehr genaue und somit enge Passung hat. Selbst wenn dadurch Reibungskräfte auftreten, ist es beim Drücken von der Unterseite her durch die Bohrung auf den Konus einfach, diesen aus der Vertiefung zu entfernen.

Gemäß einer bevorzugten Weiterbildung der Erfindung ist vorgesehen, dass die Zahnkrone nach dem Modell der Zahnkrone in einem Gießverfahren gegossen wird oder in einem Fräsverfahren hergestellt wird oder in einem 3D-Druckverfahren hergestellt wird. Zur Herstellung der Zahnkrone selbst können somit je nach Bedarf verschiedene in der Zahntechnik bekannte Verfahren angewandt werden.

Gegenstand der vorliegenden Erfindung ist weiterhin ein auf einen Konus aufgesetztes Modell eines Zahnstumpfs zur Verwendung in einem Verfahren der zuvor geschilderten Art, wobei gemäß der Erfindung das Modell mit dem Konus anhand digitaler Daten im 3D-Druckverfahren hergestellt wurde und wobei der Konus wenigstens eine Markierung in seinem Umfangsbereich, insbesondere in Form einer Vertiefung im Umfangsbereich aufweist.

Gemäß einer bevorzugten Weiterbildung der Erfindung weist der Konus wenigstens eine sich entlang der Mantelfläche ersteckende Vertiefung als Verdrehschutz auf.

Vorzugsweise ist es weiterhin so, dass die genannte Vertiefung im Umfangsbereich des Konus für den Verdrehschutz einen sich in Längsrichtung entlang der Mantelfläche des Konus kontinuierlich verjüngenden Querschnitt aufweist und/oder einen teilkreisförmigen Querschnitt aufweist.

Die in den Unteransprüchen genannten Merkmale betreffen bevorzugte Weiterbildungen der erfindungsgemäßen Aufgabenlösung. Weitere Vorteile der Erfindung ergeben sich aus der nachfolgenden Detailbeschreibung.

Nachfolgend wird die vorliegende Erfindung anhand von Ausführungsbeispielen unter Bezugnahme auf die beiliegenden Zeichnungen näher beschrieben.

Dabei zeigen:
Figur 1 die mittels eines Intraoralscanners digitalisierte Ausgangssituation der Zahnreihe eines Patienten mit einem zu überkronenden Zahnstumpf;
Figur 2 eine perspektivische Ansicht eines Modells der Zahnsituation des Patienten, bei dem der Einzelstumpf aus dem Modell herausgetrennt ist;
Figur 3 eine schematisch vereinfachte Ansicht eines Konus mit dem darauf befindlichen Zahnstumpf des zu überkronenden Zahns;
Figur 4 eine weitere Ansicht des Konus mit dem Zahnstumpf;
Figur 5 einen horizontalen Schnitt durch den Konus von Figur 4;
Figur 6 eine weitere Ansicht, bei der der Konus in das Modell der Zahnsituation eingesetzt ist.

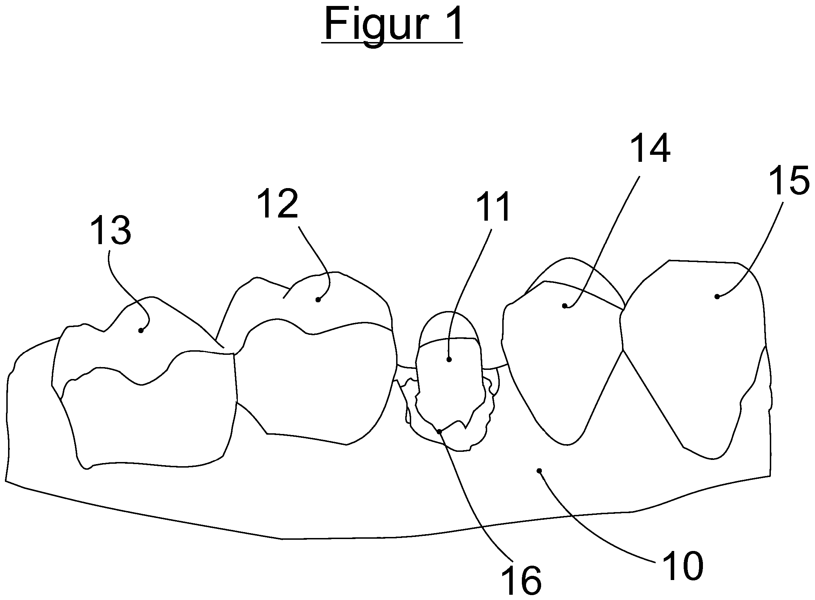

Nachfolgend wird zunächst auf die Figur 1 Bezug genommen und anhand dieser wird die Aufnahme der digitalen Daten der Zahnsituation des Patienten, die zur Herstellung eines Modells dient, näher erläutert. Man erkennt in Figur 1 eine Zahnsituation 10 eines Patienten, von der mittels des Intraoralscanners eine digitale Aufnahme erstellt wurde. In dieser Zahnsituation befindet sich ein Zahnstumpf 11, der überkront werden soll. Zu dem Zahnstumpf benachbart liegen mehrere weitere Zähne 12, 13, 14, 15. Der Zahnstumpf 11 wurde von einem Zahnarzt präpariert und bis unter die Präparationsgrenze 16 freigelegt. Da nach dem Abscannen der Zahnsituation zunächst nur Daten gewonnen werden, die die Oberfläche der Zähne und des Zahnfleisches wiedergeben, ist anschließend eine Umwandlung dieser Daten beispielsweise mittels einer CAD-Software notwendig, um quasi Daten einer dreidimensionalen Darstellung zu gewinnen, die sich für einen anschließenden 3D-Druck eignen.

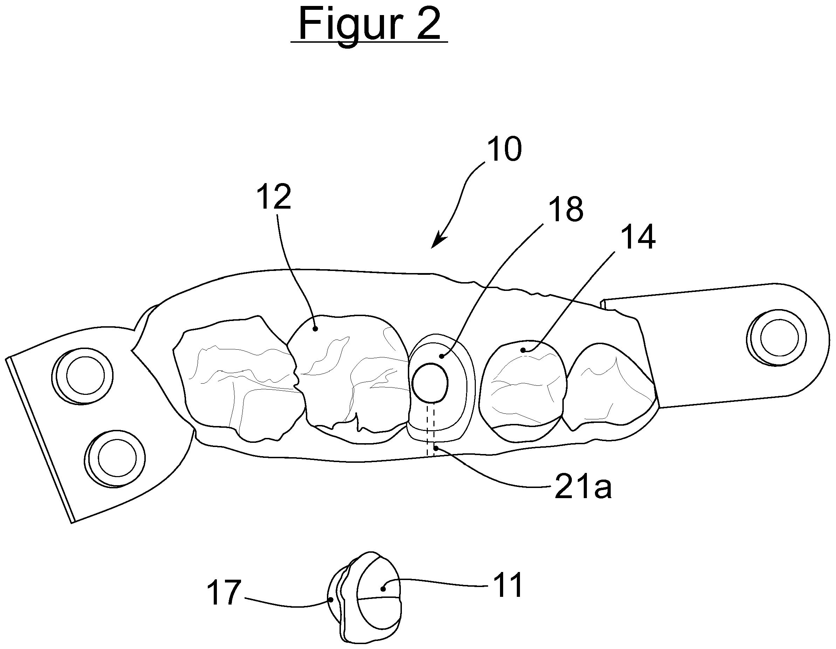

Bevor nun anhand der so gewonnenen Bilddaten ein Modell der Zahnsituation gedruckt wird, wird nun virtuell, d.h. digital der Zahnstumpf 11 aus dem Modell der Zahnsituation mit den übrigen Zähnen herausgetrennt, derart, dass sich unterseitig an dem Zahnstumpf 11 ein Konus 17 befindet und in der Abbildung der Zahnsituation 10 eine konische Vertiefung 18 verbleibt, die genau komplementär zu dem herausgetrennten Konus 17 ist. Dies ist datentechnisch möglich und das Ergebnis ist in der Figur 2 dargestellt, auf die nachfolgend Bezug genommen wird.

Man sieht in Figur 2 perspektivisch von oben gesehen das digitale Modell der Zahnsituation 10, aus der der Konus 17, auf dem der Zahnstumpf 11 sitzt, herausgetrennt wurde, so dass zwischen den beiden Zähnen 12 und 14 eine konische Vertiefung 18 verbleibt, in die der Konus 17 hineinpasst. Der Konus 17 mit dem Zahnstumpf ist daher in Figur 2 separat dargestellt.

Anhand dieser quasi digital separierten Daten für den Konus 17 mit dem Zahnstumpf einerseits und für die Zahnsituation 10 mit den übrigen Zähnen und der durch die Entnahme des Konus entstandenen konischen Vertiefung 18 werden danach jeweils im 3D-Druck zwei Modelle erstellt, nämlich einmal das Modell der Zahnsituation 10 mit der Vertiefung 18 und zum anderen das Modell des auf dem Konus 17 sitzenden Zahnstumpfs 11.

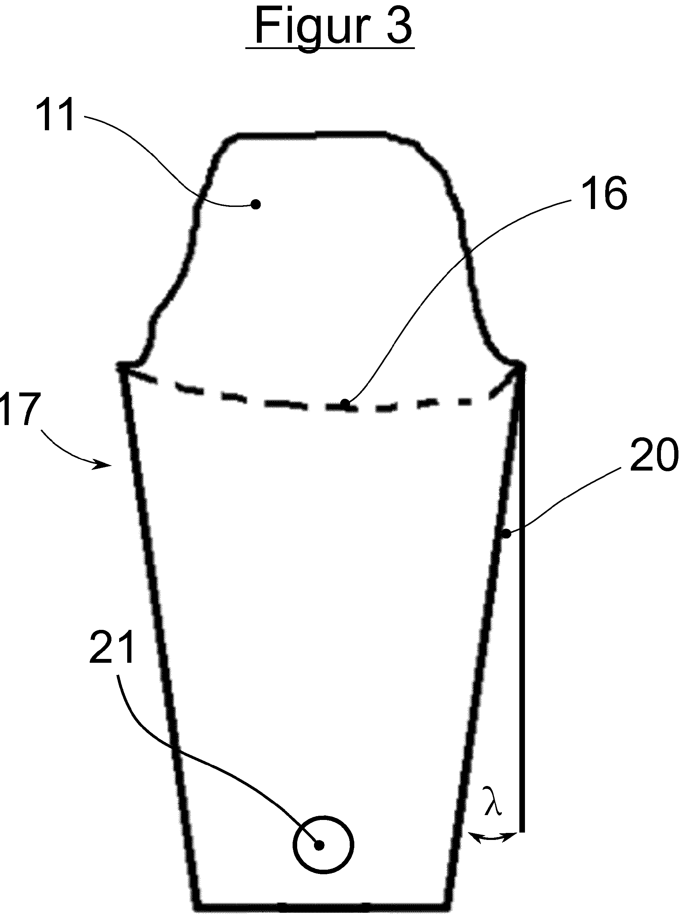

Letzteres ist in Figur 3 in der Seitenansicht schematisch vereinfacht dargestellt. Man erkennt hier den vergleichsweise schlanken Konus 17, der sich oberseitig bis zu der Präparationsgrenze 16 erstreckt. Der Winkel, den die Mantelfläche 20 des Konus 17 mit der Vertikalen einnimmt, wird als λ bezeichnet und ist vergleichsweise klein, er liegt beispielsweise im Bereich von 2° bis 20°. Der Konus ist so ausgerichtet, dass der Zahnstumpf 11 auf seiner breiteren oberen Fläche aufsitzt, das heißt, der Konus wird bezogen auf den Zahnstumpf 11 von oben nach unten hin schmaler.

In Figur 3 ist weiterhin erkennbar, dass sich in der Mantelfläche des Konus 17 etwa im unteren Endbereich eine Vertiefung 21 befindet, die beispielsweise einen kreisrunden Umriss hat. Diese Vertiefung 21 dient zur Kontrolle der richtigen axialen Position des Konus 17, wenn dieser wieder in die Vertiefung 18 in dem Modell der Zahnsituation 10 eingesetzt wird, um auszuprobieren, ob die auf dem Zahnstumpf gefertigte Krone richtig ausgerichtet ist in Bezug auf die benachbarten Zähne. Diese Kontrolle kann so erfolgen, dass sich in der konischen Vertiefung 18 der Zahnsituation ein Kontrollfenster 21a (siehe Figur 2) befindet, so dass der Zahntechniker durch dieses hindurchschauen kann und dann nach dem Einsetzen des Konus 17 erkennt, ob die Vertiefung 21 mit dem Kontrollfenster 21a zur Deckung kommt, denn dann ist die exakte axiale Endposition des Konus 17 in der konischen Vertiefung 18 gegeben.

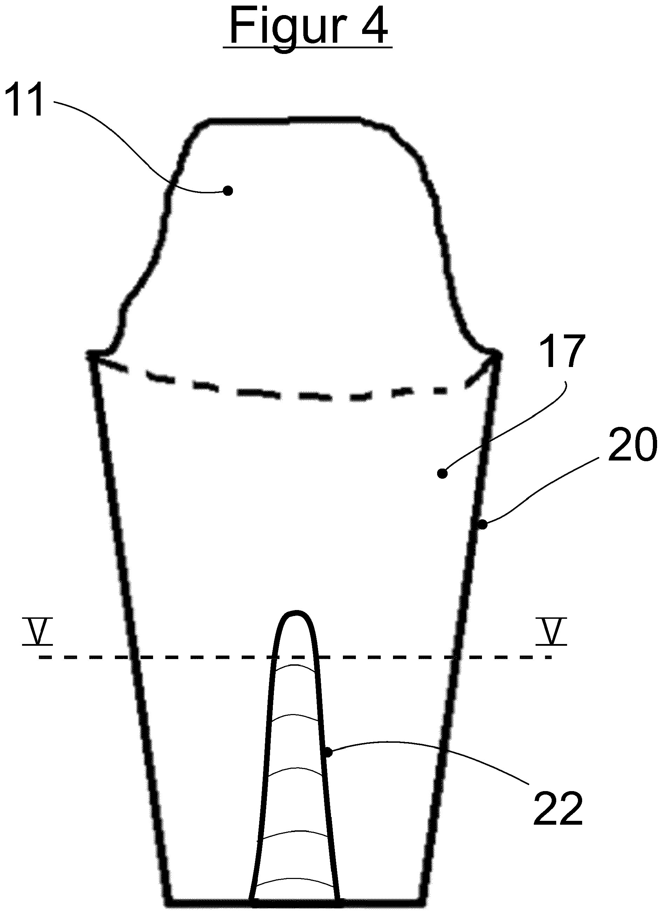

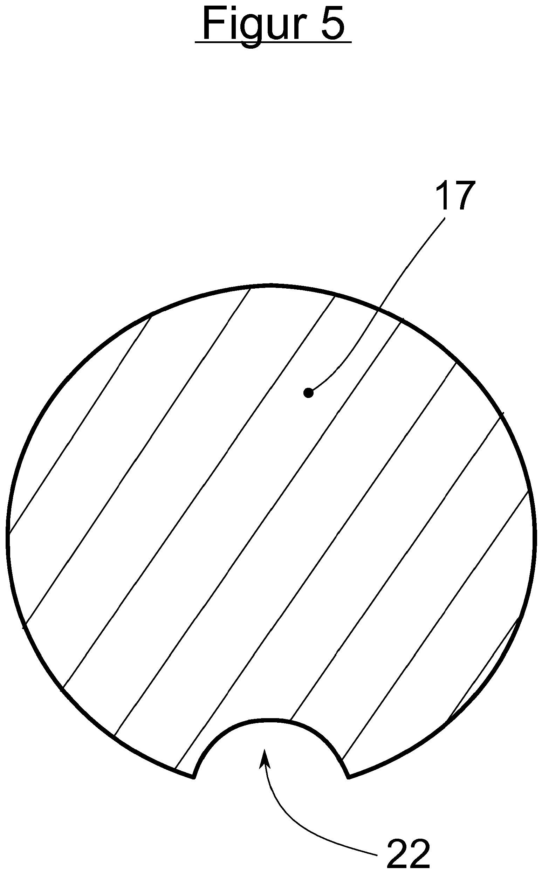

Nachfolgend wird auf die Figuren 4 und 5 Bezug genommen und anhand dieser wird ein Verdrehschutz beschrieben, mittels dessen ein Rotieren des in die konische Vertiefung 18 eingesetzten Konus 17 in der Vertiefung um die eigene Achse der Vertiefung verhindert werden kann. Für diesen Verdrehschutz ist in die Mantelfläche 20 des Konus eine Vertiefung 22 oder Nut eingearbeitet, die sich in Längsrichtung von oben nach unten entlang der Mantelfläche 20 des Konus 17 erstreckt und sich beispielsweise bis zum unteren Ende des Konus hin, aber nicht bis zum oberen Ende des Konus hin, erstreckt, wobei das untere Ende des Konus schmaler ist als dessen oberes Ende, auf dem sich der Zahnstumpf 11 befindet. In Figur 5 erkennt man die Vertiefung oder Nut 22 im Querschnitt und sieht, dass diese in etwa einen teilkreisförmigen Querschnitt hat. In Figur 4 kann man erkennen, dass sich die Vertiefung 22 in Längsrichtung entlang der Mantelfläche beispielsweise von der Mitte des Konus ausgehend etwa bis zu dessen unterem Ende hin erstreckt, wobei die Vertiefung 22 selbst sich von oben nach unten hin konisch verbreitert.

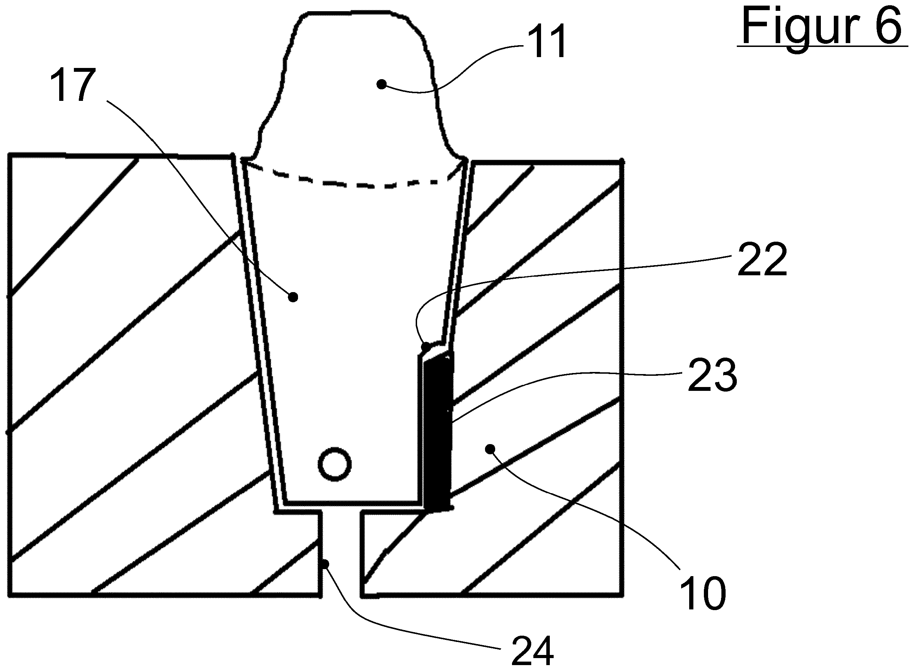

Figur 6 zeigt, dass sich in dem Modell der Zahnsituation 10 in der konischen Vertiefung 18, die den Konus 17 aufnimmt, ein erhabener Bereich 23 wie eine Art Feder befindet, der dort radial vorspringt, so dass dieser erhabene Bereich 23 in die Vertiefung 22 des Konus eingreift und eine Führung und einen Formschluss erzeugt, wenn der Konus 17 von oben her in die konische Vertiefung 18 eingeschoben wird. Dadurch ist es nicht mehr möglich, dass der eingesetzte Konus um seine Achse rotiert, womit neben der axialen Endposition auch die Drehposition und Orientierung des Konus festgelegt ist, so dass damit die Zylinderkoordinaten des Modells von dem Konus 17 in Bezug auf das Modell der Zahnsituation 10 genau festgelegt sind. Daraus ergibt sich die genaue Position des Zahnstumpfs 11 relativ zu den benachbarten Zähnen der Zahnsituation 10 und der Zahntechniker kann bei der Anfertigung zunächst eines Modells der Krone auf dem Zahnstumpf sich an der Position der benachbarten Zähne orientieren und die Krone so modellieren, dass sie genau in das Gebiss des Patienten passt.

Ist dies nicht der Fall, nimmt der Zahntechniker den Konus 17, auf dem sich oberseitig der Zahnstumpf 11 befindet, wieder aus der konischen Vertiefung 18 heraus. Um dieses Herausnehmen bei genauer Passung zu vereinfachen, ist in der konischen Vertiefung 18 an deren unterem Ende eine nach oben hin zur Vertiefung 18 und nach unten hin offene Bohrung 24 vorgesehen, so dass man mittels eines in die Bohrung eingeführten Werkzeugs den Konus nach oben hin aus der konischen Vertiefung 18 drücken kann. Die Bohrung 24 erstreckt sich in axialer Richtung durch das Modell der Zahnleiste 10 hindurch, so dass man bei Einführung des Werkzeugs in die Bohrung 24 mit diesem unter die untere Fläche des Konus drücken kann.

### Bezugszeichenliste

- 10: Zahnsituation
- 11: Zahnstumpf
- 12: Zahn
- 13: Zahn
- 14: Zahn
- 15: Zahn
- 16: Präparationsgrenze
- 17: Konus
- 18: konische Vertiefung/Ausnehmung
- 20: Mantelfläche
- 21: kreisrunde Vertiefung
- 21a: Kontrollfenster
- 22: Vertiefung, Aussparung, Nut
- 23: erhabener Bereich
- 24: Bohrung

## Patentansprüche

1. Verfahren zur Herstellung eines Arbeitsmodells für dentalmedizinische Zwecke aus einer digitalisierten Abformung, wobei
--man mittels eines Intraoralscanners einen digitalen Datensatz zur Darstellung eines Modells einer bestehenden Zahnreihe (10) umfassend einen mit einer Zahnkrone zu versehenden Zahnstumpf (11) erstellt,
--man die digitalen Daten betreffend den Zahnstumpf (11) von den Daten betreffend die Zahnreihe (10) mit den übrigen Zähnen trennt,
--man von der Zahnreihe (10) mit den übrigen Zähnen ohne den Zahnstumpf (11) anhand der digitalen Daten im 3D-Druck ein reales Modell erstellt,
--man anhand der digitalen Daten betreffend den Zahnstumpf (11) diesen zunächst virtuell auf einen Konus (17) aufsetzt,
--man von dem auf den Konus (17) aufgesetzten Zahnstumpf (11) anhand der digitalen Daten im 3D-Druck ein reales Modell erstellt, welches im Bereich des extrahierten Zahnstumpfs (11) zu dem realen Modell der Zahnreihe (10) mit den übrigen Zähnen komplementär ist,
--man das reale Modell des Zahnstumpfs (11) mittels des Konus (17) in das reale Modell der Zahnreihe (10) mit den übrigen Zähnen einpasst,
**dadurch gekennzeichnet, dass** man zum Verhindern einer Rotation des Konus (17), auf dem sich das Modell des Zahnstumpfes (11) befindet, in einer entsprechenden
konischen Ausnehmung (18) im Modell der Zahnreihe an dem Konus (17) eine seitliche Aussparung (22) als Verdrehschutz einbringt, der ein entsprechender erhabener Bereich (23) in der konischen Ausnehmung (18) des Modells der Zahnreihe (10) entspricht, welcher passend in die Aussparung (22) eingreift.

2. Verfahren nach Anspruch 1, **dadurch gekennzeichnet, dass** man die mittels des Intraoralscanners gewonnenen Daten, die die Oberfläche der abgescannten Zahnreihe (10) wiedergeben, mittels einer geeigneten Software in für einen 3D-Druck geeignete Daten umwandelt.

3. Verfahren nach Anspruch 1 oder 2, **dadurch gekennzeichnet, dass** man die exakte axiale Position des Modells des Zahnstumpfes (11) in dem Modell der Zahnreihe (10) über die Länge des Konus (17) und/oder den Konuswinkel (λ) des Konus vorgibt.

4. Verfahren nach Anspruch 3, **dadurch gekennzeichnet, dass** die Konuslänge im Bereich von etwa 10 mm bis etwa 30 mm liegt.

5. Verfahren nach Anspruch 3 oder 4, **dadurch gekennzeichnet, dass** der Konuswinkel (λ) zwischen 2° und 20° beträgt, wobei der Zahnstumpf (11) auf das breitere Ende des Konus (17) aufgesetzt ist.

6. Verfahren nach einem der Ansprüche 1 bis 5, **dadurch gekennzeichnet, dass** man die exakte axiale Endposition des Modells des Zahnstumpfes (11) über wenigstens eine Markierung am Konus (17) festlegt, welcher ein Kontrollfenster im Modell der Zahnreihe (10) zugeordnet ist.

7. Verfahren nach Anspruch 6, **dadurch gekennzeichnet, dass** als Markierung eine vorzugsweise im Umriss etwa kreisrunde Vertiefung (21) im Umfangsbereich des Konus (17) vorgesehen ist.

8. Verfahren nach Anspruch 1, **dadurch gekennzeichnet, dass** die Aussparung (22) an dem Konus (17) im Schnitt etwa teilkreisförmig ausgebildet ist und sich entlang der Mantelfläche (20) des Konus (17) erstreckt.

9. Verfahren nach einem der Ansprüche 1 bis 8, **dadurch gekennzeichnet, dass** sich in dem Modell der Zahnreihe (10) unterhalb der konischen Ausnehmung (18), in die der Konus (17) mit dem Zahnstumpf (11) einsetzbar ist, eine Bohrung (24) befindet, so dass man mittels eines in die Bohrung (24) eingeführten Werkzeugs den Konus (17) nach oben hin aus der konischen Ausnehmung (18) drücken kann.

10. Verfahren zur Herstellung einer Zahnkrone aus einem Arbeitsmodell für dentalmedizinische Zwecke, **dadurch gekennzeichnet, dass** ein Arbeitsmodell gemäß einem der Ansprüche 1 bis 9 hergestellt wird, wobei auf dem Zahnstumpf (11) ein Modell der zu erstellenden Zahnkrone modelliert wird, aus dem anschließend die Zahnkrone hergestellt wird, wobei das Modell der Zahnkrone anhand der komplementären Modelle der Zahnreihe (10) und des Zahnstumpfes (11) so modelliert wird, dass sich das Modell der Zahnkrone in einer exakt definierten Position in das Modell der Zahnreihe (10) einfügt.

11. Verfahren nach Anspruch 10, **dadurch gekennzeichnet, dass** die Zahnkrone nach dem Modell der Zahnkrone in einem Gießverfahren gegossen wird oder in einem Fräsverfahren hergestellt wird oder in einem 3D-Druckverfahren hergestellt wird.

12. Verfahren nach einem der Ansprüche 1 bis 9, **dadurch gekennzeichnet, dass** die Aussparung (22) einen sich in Längsrichtung entlang der Mantelfläche (20) des Konus (17) kontinuierlich verjüngenden Querschnitt aufweist.

## Claims

1. A method for producing a working model for dental use from a digitised impression, wherein
-- a digital data record is created by means of an intraoral scanner to produce a model of an existing row of teeth (10) comprising a tooth stump (11) that is to be provided with a tooth crown,
-- the digital data relating to the tooth stump (11) are separated from the data relating to the row of teeth (10) comprising the other teeth,
-- a real model of the row of teeth (10) comprising the other teeth without the tooth stump (11) is created by way of 3D printing on the basis of the digital data,
-- the tooth stump (11) is firstly placed virtually on a cone (17) on the basis of the digital data relating to said tooth stump,
-- a real model of the tooth stump (11) placed on the cone (17) is created by way of 3D printing on the basis of the digital data and is complementary, in the region of the extracted tooth stump (11), to the real model of the row of teeth (10) comprising the other teeth,
-- the real model of the tooth stump (11) is fitted by means of the cone (17) into the real model of the row of teeth (10) comprising the other teeth,
**characterised in that**, to prevent rotation of the cone (17) on which the model of the tooth stump (11) is situated, a lateral cut-out (22) is made on the cone (17) in a corresponding conical recess (18) in the model of the row of teeth to provide protection against rotation, which cut-out corresponds to a corresponding raised region (23) in the conical recess (18) of the model of the row of teeth (10), said raised region fitting in the cut-out (22) in engagement therewith.

2. The method according to claim 1, **characterised in that** the data obtained by means of the intraoral scanner and reproducing the surface of the scanned row of teeth (10) are converted by means of a suitable software into data suitable for 3D printing.

3. The method according to claim 1 or 2, **characterised in that** the exact axial position of the model of the tooth stump (11) in the model of the row of teeth (10) is specified by the length of the cone (17) and/or the cone angle (λ) of the cone.

4. The method according to claim 3, **characterised in that** the cone length lies in the range of from approximately 10 mm to approximately 30 mm.

5. The method according to claim 3 or 4, **characterised in that** the cone angle (λ) is between 2° and 20°, the tooth stump (11) being placed onto wider end of the cone (17).

6. The method according to one of claims 1 to 5, **characterised in that** the exact axial end position of the model of the tooth stump (11) is defined via at least one marking on the cone (17), which marking is assigned a control window in the model of the row of teeth (10).

7. The method according to claim 6, **characterised in that** an indentation (21) preferably having an approximately circular outline is provided as a marking in the circumferential region of the cone (17).

8. The method according to claim 1, **characterised in that** the cut-out (22) on the cone (17) is approximately part-circle-shaped and extends along the lateral surface (20) of the cone (17).

9. The method according to one of claims 1 to 8, **characterised in that** a bore (24) is situated in the model of the row of teeth (10) below the conical recess (18) into which the cone (17) with the tooth stump (11) is insertable, so that the cone (17) can be pressed upwardly from the conical recess (18) by means of a tool introduced into the bore (24).

10. A method for producing a tooth crown from a working model for dental use, **characterised in that** a working model is produced in accordance with one of claims 1 to 9, a model of the tooth crown that is to be created being modelled on the tooth stump (11) and the tooth crown then being produced on this basis, the model of the tooth crown being modelled on the basis of the complementary models of the row of teeth (10) and of the tooth stump (11) so that the model of the tooth crown fits into the model of the row of teeth (10) in an exactly defined position.

11. The method according to claim 10, **characterised in that** the tooth crown is cast in a casting process or is produced in a milling process or is produced in a 3D printing process on the basis of the model of the tooth crown.

12. The method according to one of claims 1 to 9, **characterised in that** the cut-out (22) has a cross section that tapers continuously in the longitudinal direction along the lateral surface (20) of the cone (17) .

## Revendications

1. Procédé de fabrication d'un modèle de travail à des fins de médecine dentaire à partir d'une formation numérisée, dans lequel
-- on produit un jeu de données numériques au moyen d'un scanner intraoral pour représenter un modèle d'une rangée de dents (10) existante comprenant un moignon de dent (11) à doter d'une couronne dentaire,
-- on sépare les données numériques concernant le moignon de dent (11) des données concernant la rangée de dents (10),
-- on produit un modèle réel en impression 3D de la rangée de dents (10) avec les dents restantes sans le moignon de dent (11) à l'aide des données numériques,
-- à l'aide des données numériques concernant le moignon de dent (11), on place celui-ci d'abord virtuellement sur le cône (17),
-- on produit un modèle réel en impression 3D du moignon de dent (11) placé sur le cône (17), lequel est complémentaire des dents restantes dans la zone du moignon de dent (11) extrait par rapport au modèle réel de la rangée de dents (10),
-- on emboîte le modèle réel du moignon de dent (11) au moyen du cône (17) dans le modèle réel de la rangée de dents (10) avec les dents restantes,
**caractérisé en ce que** pour empêcher une rotation du cône (17) sur lequel se trouve le modèle du moignon de dent (11), on intègre dans une cavité conique (18) correspondante dans le modèle de la rangée de dents sur le cône (17), un évidement latéral (22) comme protection anti-rotation, qui correspond à une zone (23) en relief correspondante dans la cavité (18) conique du modèle de rangée de dents (10), lequel se met en prise de manière correspondante dans l'évidement latéral (22).

2. Procédé selon la revendication 1, **caractérisé en ce que** l'on convertit les données extraites au moyen du scanner intraoral qui restituent la surface de la rangée de dents (10) scannée, en données appropriées pour une impression 3D au moyen d'un logiciel approprié.

3. Procédé selon la revendication 1 ou 2, **caractérisé en ce que** l'on prédéfinit la position axiale exacte du modèle du moignon de dent (11) dans le modèle de la rangée de dents (10) sur la longueur du cône (17) et/ou l'angle du cône (λ).

4. Procédé selon la revendication 3, **caractérisé en ce que** la longueur de cône est située dans la plage d'environ 10 mm à environ 30 mm.

5. Procédé selon la revendication 3 ou 4, **caractérisé en ce que** l'angle du cône (λ) fait entre 2° et 20°, dans lequel le moignon de dent (11) est placé sur l'extrémité plus large du cône (17).

6. Procédé selon l'une des revendications 1 à 5, **caractérisé en ce que** l'on détermine la position d'extrémité axiale exacte du modèle du moignon de dent (11) par au moins un marquage sur le cône (17), à laquelle est attribuée une fenêtre de contrôle dans le modèle de la rangée de dents (10).

7. Procédé selon la revendication 6, **caractérisé en ce que** l'on prévoit comme marquage un creux (21) de préférence de périmètre rond environ dans le pourtour du cône (17).

8. Procédé selon la revendication 1, **caractérisé en ce que** l'évidement (22) sur le cône (17) est conçu environ partiellement en cercle primitif en coupe et s'étend le long de la surface d'enveloppe (20) du cône (17) .

9. Procédé selon l'une des revendications 1 à 8, **caractérisé en ce qu'**un perçage (24) se trouve dans le modèle de la rangée de dents (10) sous la cavité conique (18) dans lequel le cône (17) peut être inséré avec le moignon de dent (11), de façon à ce que l'on puisse, à l'aide d'un outil introduit dans le perçage (24), appuyer le cône (17) vers le haut à partir de la cavité conique (18).

10. Procédé de fabrication d'une couronne dentaire à partir d'un modèle de travail à des fins de médecine dentaire, **caractérisé en ce qu'**un modèle de travail est fabriqué selon l'une des revendications 1 à 9, dans lequel un modèle de la couronne dentaire à fabriquer est modélisé sur le moignon de dent (11), à partir duquel la couronne dentaire est ensuite fabriquée, dans lequel le modèle de la couronne dentaire est modélisé à l'aide des modèles complémentaires de la rangée de dents (10) et du moignon de dent (11), de sorte que le modèle de la couronne dentaire s'insère dans le modèle de la rangée de dents (10) dans une position définie exactement.

11. Procédé selon la revendication 10, **caractérisé en ce que** la couronne dentaire est coulée dans un procédé de coulée ou est fabriquée dans un procédé de fraisage ou dans un procédé d'impression 3D d'après le modèle de la couronne dentaire.

12. Procédé selon l'une des revendications 1 à 9, **caractérisé en ce que** l'évidement (22) présente une section se réduisant en continu dans le sens longitudinal le long de la surface d'enveloppe (20) du cône (17).
